Europäisches Patentamt

European Patent Office

Office européen des brevets

(11) Publication number: **0 175 660**
A1

# EUROPEAN PATENT APPLICATION

(21) Application number: **85830232.6**

(22) Date of filing: **13.09.85**

(51) Int. Cl.⁴: **F 21 V 21/26**

(30) Priority: **18.09.84 IT 1182484 U**

(43) Date of publication of application: **26.03.86**
**Bulletin 86/13**

(84) Designated Contracting States: **AT BE CH DE FR GB LI NL SE**

(71) Applicant: **TARGETTI SANKEY S.p.A., Via Pratese 164, I-50145 Firenze (IT)**

(72) Inventor: **Targette, Giampaolo, Via Barbacane, 29, I-50133 Firenze (IT)**

(74) Representative: **Mannucci, Gianfranco, Dott.-Ing., Ufficio Tecnico Ing. A. Mannucci Via della Scala 4, I-50123 Firenze (IT)**

(54) Balancing device for table lamps of articulated equipment type, with an articulated quadrilateral associated to an elastic element acting along a diagonal.

(57)    A balancing device for table lamps with an articulated equipment, comprises: between the base and support structure (1) and the equipment (7) articulated to said structure, a system (10, 12, 14, 18) arranged as an articulated quadrilateral that becomes deformed with the angular displacement of the equipment (7) and a reaction elastic means (24), that operates along a diagonal of the articulated system (10, 12, 14, 18), in such a way as to increase the elastic stress exerted on the equipment (7) as it moves moving away its barycenter from the vertical line respect to the horizontal articulation axis (5), in order to compensate the torque tending to furtherly lower the lamp.

"BALANCING DEVICE FOR TABLE LAMPS OF ARTICULATED EQUIPMENT
TYPE, WITH AN ARTICULATED QUADRILATERAL ASSOCIATED TO AN
ELASTIC ELEMENT ACTING ALONG A DIAGONAL"

## DESCRIPTION

The Model is relevant to a balancing device for table
lamps and equivalent uses, with an equipment articulated
respect to a horizontal axis, which can move angularly so
that it results more or less slanting respect to the horizontal line. Since an equipment of this kind is not always
in a state of neutral equilibrium for any position that
it can take, it results advisable to provide a balancing
system that can operate in a gradual way proportionally
to the unbalance that said equipment generally undergoes
when it gets away from the vertical line.

Substantially, according to the Model, between the base
and support structure and the equipment articulated to said
structure, a system arranged as an articulated quadrilateral
and especially arranged as an articulated parallelogram is
developed that becomes deformed in accordance to the angular
displacement of the equipment, and a reaction elastic means
is provided that operates along a diagonal of the system
arranged as an articulated quadrilateral, in such a way
that said means increases the elastic stress exerted on

0175650

the equipment as it moves moving away its barycenter from
the vertical line respect to the horizontal articulation
axis; in this way the torque generated by the weight, which
tends to increase with the further displacement of the lamp,
is compensated.

In practice and advantageously the parallelogram or articulated quadrilateral is provided with at least one annular
elastic member, that is deviated in a pulley transmission
system in correspondence of three points on three articulations of the articulated parallelogram and that extends
along the diagonal that tends to lengthen because the displacement of the articulated equipment, in the direction for
which the barycenter of said equipment gets away from the
vertical line respect to the articulation; the elastic ring
is subject to tensile stress.

By providing a base and an equipment with a stem, two
of the adjacent sides of the articulated parallelogram are
realized respectively solid with the base and with the stem.
In practice the system arranged as an articulated parallelogram is formed with two opposite sides each one defined by
a small plate and the remaining two opposite sides each one
defined by a couple of small plates. Three articulations of
the system arranged as an articulated parallelogram carry
projections with pulleys or equivalent at the opposite
sides and on the pulleys two elastic annular elements are

- 3 -

mounted and deviated, generally toric and especially rubber 0175660

made or consisting of an helicoidal metallic spring.

The drawing shows a possible embodiment of the Model and in particular:

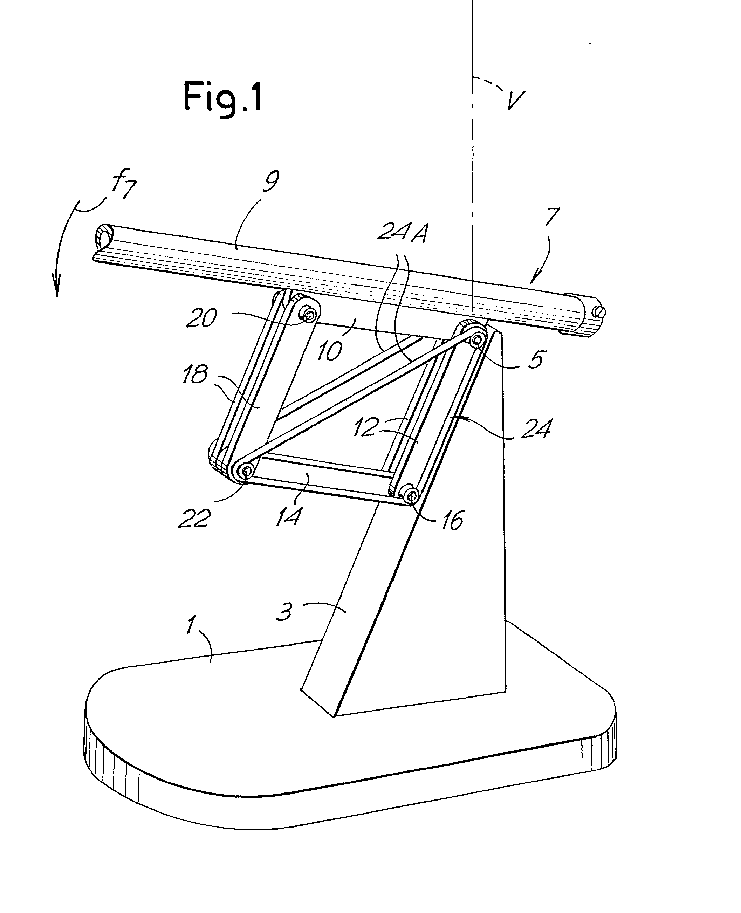

Fig. 1 shows a perspective view of a portion of the lamp equipped with the balancing device considered in this description;

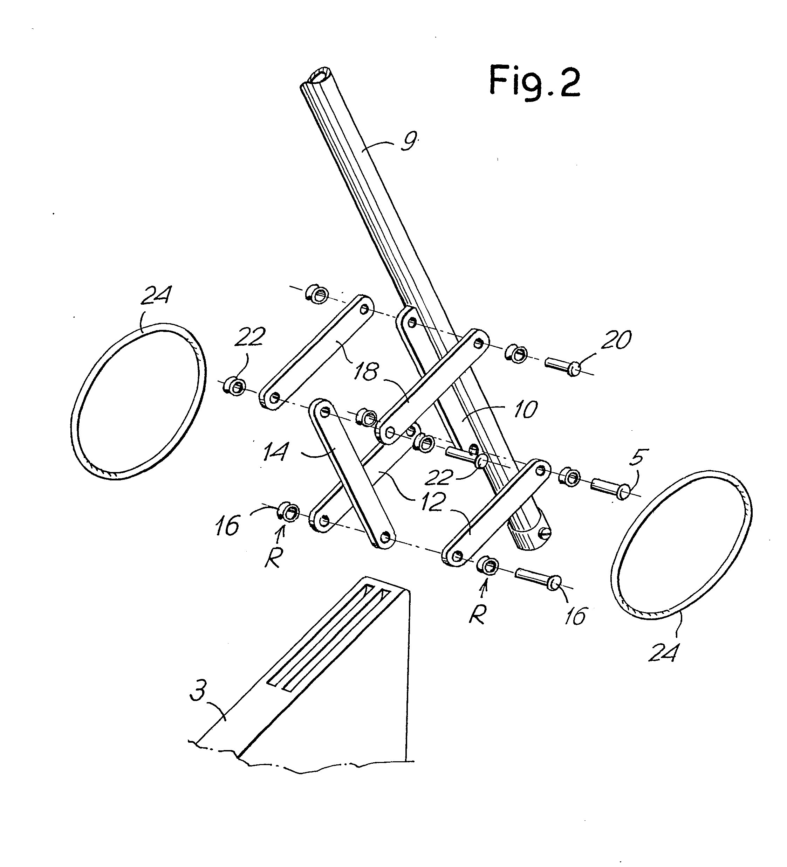

Fig. 2 shows an exploded view of the components shown in Fig. 1;

The drawing shows a base provided with a plate 1 and a stanchion 3. At the end of the stanchion is articulated at 5, according to a horizontal axis, the equipment 7 of the movable portion of the lamp, and said equipment in particular includes a stem 9. The equipment is not balanced respect to the articulation axis and then the stress due to its weight tends to increase on it, as the equipment is lowered according to arrow f7, because the moving away of the barycenter respect to a vertical line indicated by V and passing in the area of the articulation 5. A balancing intervention is therefore advisable proper to tend to increase its own reaction for a lifting in the direction opposite to the arrow f7, as the equipment 7,9 is lowered. This is realized by the system arranged as an articulated quadrilateral and in particular arranged as an articulated parallelogram. To carry out this, there are provided according to the drawing:

a small plate 10 solid with the stem 9; a couple of small plates solid with the stanchion 3 of the base, and articulated according to the articulation axis 5 to the small plate 10; a small plate 14 articulated at 16 to the couple of small plates 12 and located between them; a couple of small plates 18, articulated at 20 to the small plate 10 (that is located between them) and at 22 to the small plate 14 that is also placed between the plates 18). Thus an articulated parallelogram is generated, that, when the equipment 7,9 is lowered according to f7, becomes deformed with a progressive mutual moving away of the articulations 5 and 22.

Corresponding to the articulations 5,22 and 16, at the outside of the small plates constrained to said articulations small transmission wheels (or transmission buttons) are placed, indicated by R and on said wheels are mounted two elastic annular elements 24, that therefore extend triangularly and any way with a branch 24A substantially extending along the diagonal of the articulated parallelogram between the articulations 5 and 22. These branches 24A of the two elements 24 evidently lengthen and then the whole elements 24 lengthen, when the equipment 7,9 is lowered according to f7, thus increasing the reaction thrust on the articulated parallelogram that tends to impede the lowering of the equipment due to the effect of the weight.

Although the law, according that the elastic reaction of the balancing system varies, does not correspond exactly to what results necessary for a perfect balancing, the arrangement is sufficient to assure the balancing in combination with a suitable friction effect, that compensates the little differences in respect to a precise balancing.

CLAIMS

1. A balancing device for table lamps with an articulated equipment, characterized in that it comprises: between the base and support structure (1) and the equipment (7) articulated to said structure, a system (10,12,14,18) arranged as an articulated quadrilateral that becomes deformed with the angular displacement of the equipment (7); and a reaction elastic means (24), that operates along a diagonal of the articulated system (10,12,14,18), in such a way as to increase the elastic stress exerted on the equipment (7) as it moves moving away its barycenter from the vertical line respect to the horizontal articulation axis (5), in order to compensate the torque tending to furtherly lower the lamp.

2. A device as per the preceding claim, characterized in that the articulated quadrilateral and especially parallelogram arranged system (10,12,14,18) is provided with at least one annular elastic member (24) subject to tensile stress, which is deviated in a pulley type transmission arrangement along the diagonal that tends to legthen, with the displacement of the equipment in the direction in which the barycenter of said equipment (7) gets away from the vertical line respect to the articulation (5).

3. A device as per the preceding claims, characterized in that the elastic member (24) is deviated in a pulley type arrangement in correspondence of three articulations

- 2

0175660

(5,16,22) of the articulated quadrilateral (10,12,14,18).

4. A device as per the preceding claims, applied. to a lamp provided with a base and an equipment (7) with a stem (9), characterized in that two adjacent sides (10,12) of the articulated quadrilateral (10,12,14,18) are solid with the base (1) and with the stem (9) respectively.

5. A device as per the preceding claims, characterized in that the articulated quadrilateral system (10,12,14,18) is formed with opposite sides each one defined by a small plate (10,14) and the other two opposite sides each one defined by a couple of small plates (12,18); on three articulations (5,16,22) of the articulated system, pulley formed projections (R) or equivalent being carried at opposite sides, on which there are mounted and deviated in a pulley type arrangement two elastic annular elements (24) generally toric and especially rubber made or consisting of an helicoidal metallic spring.

6. A balancing device for table lamps of articulated rod type, as described and illustrated.

Fig.1

Fig.2

0175660

**European Patent Office**

**EUROPEAN SEARCH REPORT**

Application number

EP 85 83 0232

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 973 748 (MASUO NAGASAKA)<br>* Figure 1 * | 1,5 | F 21 V 21/26 |
| | --- | | |
| A | DE-A-2 535 607 (LESKE)<br>* Figures 1-4 * | 1 | |
| | --- | | |
| A | DE-C- 724 359<br>(NEUMANN-NEANDER)<br>* Figure 3 * | 1,2 | |
| | --- | | |
| A | GB-A- 176 083 (TURNER)<br>* Figures 1-4 * | 1,2 | |
| | ----- | | |
| | | | **TECHNICAL FIELDS SEARCHED (Int. Cl.4)** |
| | | | F 21 V<br>F 16 F |

The present search report has been drawn up for all claims

| Place of search | Date of completion of the search | Examiner |
|---|---|---|
| THE HAGUE | 14-11-1985 | FOUCRAY R.B.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82